# EUROPÄISCHE PATENTSCHRIFT

(11) **EP 2 848 503 B1**
(45) Veröffentlichungstag und Bekanntmachung des Hinweises auf die Patenterteilung: **22.08.2018**
(21) Anmeldenummer: 14183111.5
(22) Anmeldetag: 02.09.2014
(51) Int. Cl.: B62D 63/06, B62D 53/00

(54) **Routenzug mit durchgehender Signalverbindung**
Route train with continuous signalling link
Chariot tracteur doté d'une connexion de signal ininterrompue

(30) Priorität: 17.09.2013 DE 102013110212
(43) Veröffentlichungstag der Anmeldung: 18.03.2015
(73) Patentinhaber: STILL GmbH, 22113 Hamburg (DE)
(72) Erfinder: Krüger-Basjmeleh, Tino, 25469 Halstenbek (DE); Viereck, Volker, 23898 Kühsen (DE); Jensen, Romy, 22177 Hamburg (DE)
(74) Vertreter: Patentship Patentanwaltsgesellschaft mbH

(56) Entgegenhaltungen:
- EP-A2- 2 492 173
- WO-A1-2009/106529
- DE-A1- 3 327 240
- DE-U1-202012 002 489

## Beschreibung

Die Erfindung betrifft einen Anhänger für einen Routenzug mit einer Zugvorrichtung. Insbesondere betrifft die Erfindung einen Anhänger für einen Routenzug mit einer Zugvorrichtung, etwa einer frontseitigen Zugdeichsel und einer rückseitigen Anhängerkupplung, sowie einer Signalverbindung zur Übermittlung eines Notfallsignals eines Notfallsignalgebers des Anhängers an einen Schlepper des Routenzugs sowie einen entsprechenden Routenzug.

Bekannt ist, für den innerbetrieblichen Warentransport und Materialfluss, insbesondere die Materialversorgung von Produktionsbereichen, Routenzüge einzusetzen, die auch als Schlepperzug bezeichnet werden. Ein Routenzug besteht dabei aus einem Schlepper und mindestens einem Anhänger, jedoch im Regelfall aus mehreren Anhängern. Die Anhänger weisen dabei üblicherweise eine Anhängerdeichsel auf, mit der sie in eine Kupplung des vorauslaufenden Fahrzeuges eingehängt sind. Dabei werden üblicherweise die Anhänger am Beladeort manuell beladen und ebenso an den Verwendungsorten der Ladegüter manuell entladen. Auf den Anhängern können die zu transportierenden Ladegüter bzw. Waren auch mittels Transportbehältern, wie etwa Paletten oder Gitterboxen befördert werden. Es sind auch Anhänger bekannt, die eine automatisiertes Aufnehmen und Absetzen von solchen bereits beladenen Paletten bzw. Gitterboxen ermöglichen.

In einer weiteren Stufe der Automatisierung fährt der Routenzug automatisiert ohne Fahrer, indem er von einem autonomen Schlepper gezogen wird.

Bei allen diesen beschriebenen Arten von Routenzügen, so auch bereits bei einem durch eine Person auf dem Schlepper geführten Routenzug, der automatisiert Transportbehälter aufnimmt und absetzt, jedoch insbesondere bei einem Routenzug, der voll autonom fährt, bei dem aber die Anhänger von Personen beladen und/oder entladen werden, ergeben sich Sicherheitsanforderungen in Bezug auf Personen, die sich beim Anfahren des Routenzuges zwischen Anhängern im Bereich der Anhängerdeichsel befinden könnten.

Zur Erfüllung dieser Sicherheitsanforderungen besteht eine Norm, wie ein Routenzug bei einer automatisierten Fahrt abzusichern ist. Dabei ist vor dem Anfahren des Routenzuges ein akustisches Signal für mindestens eine Zeitdauer von 2 Sekunden abzugeben. Die Geschwindigkeit des Routenzuges darf nach dem Anfahren eine Maximalgeschwindigkeit von 0,3 m/s für eine Mindestzeitdauer von 5 Sekunden nicht überschreiten. Schließlich ist als optische Warnvorrichtung eine Markierung im Bereich der Anhängerdeichsel in den Farben schwarz/gelb oder alternativ rot/weiß vorzusehen. Durch diese Maßnahme, so durch das langsame Anfahren und das akustische Signal, soll erreicht werden, dass Personen auf die Gefahren aufmerksam werden und den Gefahrenbereich in jedem Fall sicher verlassen können bei einem Anfahren des Routenzuges, um Unfälle sowie Verletzungen zu vermeiden.

Nachteilig an diesem Stand der Technik ist, dass Personen in einem Gefahrenbereich zwischen den Anhängern mit den üblicherweise vorgesehenen Sensormitteln nicht erkannt werden und die Absicherung sich auf ein selbstständiges Verlassen des Gefahrenbereiches durch die Personen aufgrund der Warneinrichtungen der Anhänger beim Anfahren des Routenzuges stützt.

Bekannt sind bei autonom fahrenden Flurförderzeugen Notabschalter, die so an dem Flurförderzeug angeordnet sind, dass diese von Personen in der Umgebung jederzeit leicht betätigt werden können. Weiterhin sind insbesondere bei autonom fahrenden Flurförderzeugen automatisierte Sicherheitsvorrichtungen wie Schaltschutzleisten, auch bezeichnet als Bumper, bekannt, die beispielsweise bei mechanischem Kontakt mit einem Hindernis während der Fahrt ein Schaltsignal abgeben, über das eine Notabschaltung erfolgen kann.

Bei Routenzügen stellt sich dabei jedoch das Problem, ein entsprechendes Notfallsignal zu einem Schlepper des Routenzuges zu übertragen, wobei eine zuverlässige und sichere Übertragung anzustreben ist und mögliche Fehlerquellen beim Kuppeln und zusammenstellen des Routenzuges auszuschließen sind.

Die WO 2009/106529 A1 offenbart eine Diebstahlssicherungsvorrichtung für einen Sattelzugschlepper, bei dem die Sattelkupplung gegen ein Entwenden des Aufliegers blockiert wird. Dabei wird die Sicherungseinrichtung deaktiviert, wenn mindestens in einem fahrzeugseitigen System ein Notfallsignal erzeugt wird, beispielsweise durch einen Airbag oder einen Crashsensor.

Die EP 2 492 173 A2 offenbart einen Routenzug mit Anhängern, die jeweils eine Speichereinheit für die Abspeicherung eines Eigengewichtes aufweisen und dieses Eigengewicht an ein Schleppfahrzeug über eine Kabelverbindung übermitteln.

Die DE 20 2012 002489 U1 offenbart einen Sicherheitsschalter in Form einer Schaltleiste am Vorderende eines Routenzuganhängers, mit dem eine Absicherung erfolgen kann gegen ein Dazwischentreten einer Person zwischen zwei Anhänger.

Der vorliegenden Erfindung liegt daher die Aufgabe zugrunde, einen Anhänger für einen Routenzug sowie einen Routenzug zur Verfügung zu stellen, die eine zuverlässige und sichere Übertragung eines Notfallsignals zu einem Schlepper ermöglichen und die Sicherheit des Betriebes des Routenzuges erhöhen.

Diese Aufgabe wird durch einen Anhänger für einen Routenzug mit den Merkmalen des unabhängigen Patentanspruchs 1 sowie durch einen Routenzug mit den Merkmalen des Patentanspruchs 8 gelöst. Vorteilhafte Weiterbildungen der Erfindung sind in den Unteransprüchen angegeben.

Die Aufgabe wird dadurch gelöst, indem bei einem Anhänger für einen Routenzug mit einer Zugvorrichtung, insbesondere einer frontseitigen Zugdeichsel und einer rückseitigen Anhängerkupplung, sowie einer Signalverbindung zur Übermittlung eines Notfallsignals eines Notfallsignalgebers des Anhängers an einen Schlepper des Routenzugs, die Signalverbindung aus zwei so durch den Anhänger geführten Leitungen besteht, dass diese mit dem vorausfahrenden Fahrzeug sowie einem eventuell angehängten Anhänger verbunden werden können und das Notfallsignal durch die Unterbrechung mindestens einer Leitung erzeugt wird.

Eine solche Lösung ist sehr einfach aufzubauen und sicher sowie zuverlässig. Die zwei Leitungen können zum einen die Fahrzeugmasse und eine Signalleitung sein, oder auch zwei Signalleitung. In dem letzten Anhänger eines Routenzuges müssen diese zwei Leitungen miteinander verbunden werden. Wenn nun irgendwo in dem Routenzug eine der beiden Leitungen unterbrochen wird, so kann in dem Schlepper eine Unterbrechung des Stromkreises festgestellt werden und eine Notabschaltung ausgelöst werden. Dabei kann beispielsweise in dem Schlepper bzw. Schleppfahrzeug zwischen den zwei Leitungen eine Spannung angelegt werden und ein Signalstrom durch diesen Stromkreis geleitet werden, etwa zwischen Fahrzeugmasse und einer der Signalleitungen oder zwischen den zwei Signalleitung, der durch eine Unterbrechung als Notfallsignal ausgeschaltet wird. Im Fall einer Unterbrechung der Leitungen, wird ebenfalls eine Notabschaltung ausgeführt. Ebenso erfolgt eine Notabschaltung bzw. wird schon ein Anfahren des Routenzug verhindert, wenn die Leitungen zwischen den Anhängern nicht richtig verbunden wurden, etwa wenn Steckverbindungen nicht vorgenommen wurden.

Eine der Leitungen kann die Fahrzeugmasse einschließen.

Der Aufbau wird vereinfacht, indem nur eine isolierte Leitung durch den Anhänger geführt werden muss.

In einer vorteilhaften Weiterbildung ist der Notfallsignalgeber ein an dem Anhänger angeordneter Notfallschalter.

Durch Betätigen dieses Notfallschalters können Personen an jedem Anhänger des Routenzuges den autonom fahrenden bzw. eventuell gerade anfahrenden Schlepper des Routenzuges abschalten.

Vorteilhaft erzeugt der Notfallsignalgeber bei Annäherung eines Hindernisses von vorne an den Anhänger und/oder bei einem seitlichen Eindringen eines Hindernisses in einen Zwischenraum zwischen einem vorausfahrenden, ziehenden Fahrzeug und dem Anhänger ein Notfallsignal, insbesondere bei einem mechanischen Kontakt.

Dadurch werden vorteilhaft die Gefahren vermindert, die insbesondere entstehen, wenn automatisiert ohne Fahrer fahrende Routenzüge von Personen beladen und entladen werden. Falls eine der Personen dabei in dem Zwischenraum zwischen einem Anhänger und einem vorausfahrenden, ziehenden Fahrzeug, dies kann sowohl der Schlepper wie auch ein innerhalb des Routenzuges vor diesem angeordneter weiterer Anhänger sein, steht, so löst der Notfallsignalgeber aus und ein Anfahren des Routenzuges wird verhindert oder sofort gestoppt. Sicherheitseinrichtungen für Flurförderzeuge und Fahrzeuge, bei denen das Anstoßen an ein Hindernis über den mechanischen Kontakt erfasst wird stehen kostengünstig und zuverlässig zur Verfügung. Diese sind auch im Moment des Anfahrens mit den geringen Geschwindigkeiten, die durch insbesondere die oben beschriebene Norm vorgegeben werden, ausreichend, um Verletzungen einer Person zu verhindern. Ein Anhalten des Routenzuges bzw. sofortiges Abbrechen des Anfahrvorgangs kann ausreichend schnell erfolgen.

In einer günstigen Ausführungsform umfasst der Notfallsignalgeber eine oder mehrere an der Vorderseite des Anhängers angeordnete Schaltschutzleisten.

Solche Schaltschutzleisten werden auch als Bumper bezeichnet und lösen ein Signal aus, wenn ein mechanisches Hindernis mit einer gewissen Mindestkraft gegen diese gedrückt wird. Dabei können die Schaltschutzleisten so angeordnet werden, dass über die gesamte Breite des Anhängers ein Signal ausgelöst wird, wenn ein Gegenstand, insbesondere eine Person gegen den anfahrenden Anhänger stößt. Dabei werden die Schaltschutzleisten vorteilhaft in Bodennähe angeordnet, da durch das Anfahren an eine Person nahe dem Boden es zu typischen Verletzungen im Knöchel- und Fußbereich kommt und diese Verletzungsgefahr dadurch verringert werden kann.

Vorteilhaft umfasst der Notfallsignalgeber ein seitlich entlang des Zwischenraums zu einem vorausfahrenden, ziehenden Fahrzeug gespanntes Band, das durch Dehnung und/oder Zug auf einen an dem Anhänger befindlichen Befestigungspunkt ein Eindringen eines Hindernisses in den Zwischenraum erfasst und ein Notfallsignal erzeugt.

Dadurch wird insbesondere schon bei Stillstand des Routenzuges ein Notfallsignal ausgelöst und ein Anfahren eines Schleppers verhindert, solange eine Person sich in diesem Zwischenraum befindet und dadurch das Band dehnt bzw. einen Zug auf den Verankerungspunkt des Bandes an dem Anhänger auslöst. Es ist auch denkbar, dass das Notfallsignal aufgrund der Eigenschaften des Bandes allein schon durch die Dehnung des Bandes ausgelöst wird. An dem vorausfahrenden Fahrzeug, entweder dem Schlepper oder einem weiteren Anhänger, muss in diesem Fall eine Möglichkeit vorgesehen werden, das Band zu befestigen. Es ist denkbar, eine Signalauslösung nur im Moment des Anfahrens vorzusehen, um einen Fehlalarm bei Kurvenfahrt zu vermeiden. Der Befestigungspunkt kann an dem Anhänger einen vorgespannten Aufrollmechanismus aufweisen und ein Zug auf den Befestigungspunkt durch den Aufrollmechanismus erfasst werden.

In einer günstigen Ausführungsform wird das Band an dem vorausfahrenden Fahrzeug über zwei Umlenkführungen zurück zu dem Anhänger und somit an beiden Seiten des Zwischenraums entlang geführt. Bevorzugt weist der Anhänger selbst an seiner Rückseite dann ebenfalls zwei Umlenkführungen auf.

Diese Umlenkführungen können abgerundete Stäbe sein, über die das Band gleitet oder auch zwei drehbare Rollen. Insbesondere wird durch eine solche Führung des Bandes eine Schiefstellung eines Anhängers gegenüber dem ziehenden, vorausfahrenden Fahrzeug ausgeglichen, so dass eine Längung des Bandes, eventuell über ein Toleranzmaß hinaus, nur durch eine in den Zwischenraum hineintretende Person erfolgt sein kann. Eine Sicherheitsüberprüfung der Zwischenräume im Moment des Anfahrens kann somit auch bei einem Routenzug erfolgen, der in einer Kurve steht.

Die Aufgabe wird auch gelöst durch einen Routenzug, der aus einem Schlepper mit einer Anhängerkupplung sowie mindestens einem Anhänger besteht, wie er zuvor beschrieben wurde, wobei bei dem letzten angehängten Anhänger die Leitungen über ein Kurzschlussverbindung kurz geschlossen sind und das über die Signalverbindung übermittelte Notfallsignal eine Notabschaltung des Schleppers auslöst.

Der Routenzug weist die bereits dargestellten Vorteile auf. Es können vorteilhaft und kostengünstig somit die bei einem Schlepper bzw. Schleppfahrzeug üblicherweise vorhandenen Notabschaltungsmittel genutzt werden.

Die Kurzschlussverbindung kann ein in eine Steckverbindung eingesetzter Kurzschlussstecker sein.

Dadurch kann auf besonders einfache Art und Weise des Signalstromkreis bei dem letzten Anhänger des Routenzuges geschlossen werden.

Weitere Vorteile und Einzelheiten der Erfindung werden anhand der in den schematischen Figuren dargestellten Ausführungsbeispiele näher erläutert. Hierbei zeigt,
- Fig. 1: in Aufsicht ein Ausführungsbeispiel eines erfindungsgemäßen Routenzuges und
- Fig. 2: in Aufsicht ein weiteres Ausführungsbeispiel eines Routenzuges mit erfindungsgemäßen Anhängern.

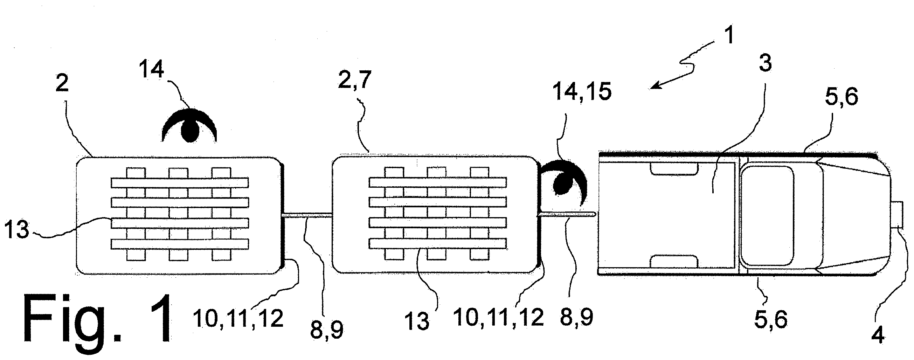

Die Fig. 1 zeigt in Aufsicht ein Ausführungsbeispiel eines erfindungsgemäßen Routenzuges 1 mit Anhängern 2, die von einem Schlepper 3 gezogen werden. Der Schlepper 3 weist an seiner Frontseite einen zusätzlichen Laserscanner 4 auf, der für die Erfindung nicht erforderlich ist und mit dem der Raum vor dem Schlepper 3 auf Hindernisse wie etwa Personen überwacht werden kann. Ebenso weist der Schlepper 3 für die Erfindung nicht unbedingt erforderliche seitliche Schaltschutzleisten 5 bzw. Bumper 6 auf. Durch den Laserscanner 4 wie auch durch die Schaltschutzleisten 5 kann über die Sicherheitsvorrichtungen des Schleppers 3 eine Notabschaltung des autonom fahrenden Schleppers 3 erfolgen.

Die zwei Anhänger 2 weisen jeweils eine Zugvorrichtung 8 bestehend aus einer Zugdeichsel 9 und einer nicht näher dargestellten Anhängerkupplung auf. Die Anhängerkupplung kann dabei in verschiedenen Ausführungen, die nach dem Stand der Technik bekannt sind, gestaltet sein, wie Kugelkopf, Zugbolzen für Zugösen und Zughaken. An der Vorderseite der Anhänger 2 ist im Bodenbereich jeweils eine Schaltschutzleiste 10 bzw. ein Bumper 11 als Notfallsignalgeber 12 vorgesehen, die bei mechanischem Kontakt mit einem Hindernis ein Notfallsignal über eine Signalverbindung an den Schlepper 3 übermittelt und dessen Sicherheitsvorrichtungen auslöst, bzw. den Schlepper 3 notabschaltet.

Auf den Anhängern 2 werden auf Paletten 13 Waren transportiert. Wenn die Anhänger 2 durch Personen 14 be- oder entladen werden und nach Beendigung dieser Tätigkeit sich noch eine Person 15 in dem Zwischenraum, im vorliegenden Fall zwischen dem Schlepper 3 als vorausfahrenden Fahrzeug und einem ersten Anhänger 7, befindet, so kommt es beim Anfahren des Schleppers 3 zu einem Kontakt der Person 15 mit der Schaltschutzleiste 10. Dadurch wird ein Notfallsignal an den Schlepper 3 übermittelt und die Sicherheitsvorrichtungen des Schleppers 3 schalten den Schlepper 3 sofort ab. Eine Verletzung der Person 15 wird vermieden. Die Übermittlung des Notfallsignals geschieht dabei dadurch, dass eine von zwei Leitungen, aus denen die Signalverbindung besteht, durch beispielsweise eine Schaltvorrichtung elektrisch unterbrochen wird. In dem Normalzustand sind die beiden Leitungen durch alle Anhänger 2 bis zum letzten Anhänger hindurchgeführt und in dem letzten Anhänger 2 durch einen Kurzschlussstecker als Kurzschlussverbindung zu einem Stromkreis verbunden. Dadurch führt jede Störung in der Signalverbindung, die eine Unterbrechung verursacht, wie auch eine Auslösung des Notfallsignals mit resultierender geschalteter Unterbrechung der Signalverbindung in irgend einem der Anhänger zu einer Notabschaltung des Schleppers 3.

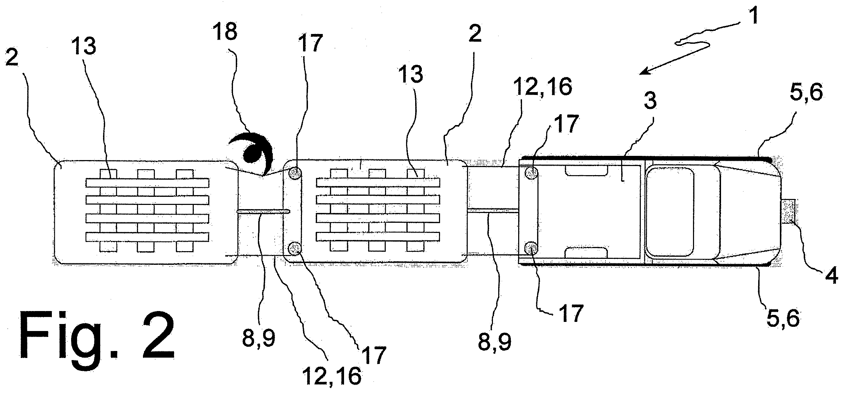

Die Fig. 2 zeigt in Aufsicht ein weiteres Ausführungsbeispiel des Routenzuges 1 mit erfindungsgemäßen Anhängern 2, die die Paletten 13 mit Waren befördern und die von dem Schlepper 3 gezogen werden, wobei den Komponenten des vorherigen Ausführungsbeispiels entsprechende Komponenten mit denselben Bezugszeichen versehen sind. Der Schlepper 3 weist an seiner Frontseite ebenfalls den zusätzlichen Laserscanner 4 auf, der für die Erfindung nicht erforderlich ist und mit dem der Raum vor dem Schlepper 3 auf Hindernisse wie etwa Personen überwacht werden kann. Ebenso weist der Schlepper 3 die für die Erfindung nicht unbedingt erforderlichen seitlichen Schaltschutzleisten 5 bzw. Bumper 6 auf. Durch den Laserscanner 4 wie auch durch die Schaltschutzleiste 5 kann über die Sicherheitsvorrichtungen des Schleppers 3 eine Notabschaltung des autonom fahrenden Schleppers 3 erfolgen.

Bei den zwei Anhängern 2 mit jeweils der aus einer Zugdeichsel 9 sowie der nicht dargestellten Anhängerkupplung bestehenden Zugvorrichtung 8 ist als Sicherheitsvorrichtung 12 ein Band 16 vorgesehen. Das Band 16 ist jeweils seitlich entlang des Zwischenraums zu dem vorausfahrenden, ziehenden Fahrzeug gespannt und wird über zwei Umlenkführungen 17 als ein durchgehendes Band von dem Anhänger 2 über das vorausfahrende Fahrzeug zurück zu dem Anhänger 2 geführt.

Wenn im Moment des Anfahrens des Schleppers 3 eine Person 18 sich zu weit in dem Zwischenraum befindet, wie dargestellt, so wird das Band 16 ausgelenkt und es entsteht ein Zug auf den Befestigungspunkt des Bandes 16 an dem Anhänger 2. Dadurch wird ein Notfallsignal ausgelöst und über die Signalverbindung an den Schlepper 3 übermittelt, das dessen Sicherheitsvorrichtungen auslöst, bzw. den Schlepper 3 notabschaltet.

## Patentansprüche

1. Anhänger für einen Routenzug (1) mit einer Zugvorrichtung (8), insbesondere einer frontseitigen Zugdeichsel (9) und einer rückseitigen Anhängerkupplung, sowie einer Signalverbindung zur Übermittlung eines Notfallsignals eines Notfallsignalgebers (12) des Anhängers an einen Schlepper (3) des Routenzugs (1),
**dadurch gekennzeichnet,**
**dass** die Signalverbindung aus zwei so durch den Anhänger (2) geführten Leitungen besteht, dass diese mit dem vorausfahrenden Fahrzeug sowie einem eventuell angehängten Anhänger (2) verbunden werden können und das Notfallsignal durch die Unterbrechung mindestens einer Leitung erzeugt wird.

2. Anhänger nach Anspruch 1,
**dadurch gekennzeichnet,**
**dass** eine der Leitungen die Fahrzeugmasse einschließt.

3. Anhänger nach Anspruch 1 oder 2,
**dadurch gekennzeichnet,**
**dass** der Notfallsignalgeber (12) ein an dem Anhänger angeordneter Notfallschalter ist.

4. Anhänger nach einem der Ansprüche 1 bis 3,
**dadurch gekennzeichnet,**
**dass** der Notfallsignalgeber (12) bei Annäherung eines Hindernisses von vorne an den Anhänger (2) und/oder bei einem seitlichen Eindringen eines Hindernisses in einen Zwischenraum zwischen einem vorausfahrenden, ziehenden Fahrzeug und dem Anhänger (2) ein Notfallsignal erzeugt, insbesondere bei einem mechanischen Kontakt.

5. Anhänger nach Anspruch 4,
**dadurch gekennzeichnet,**
**dass** der Notfallsignalgeber (12) eine oder mehrere an der Vorderseite des Anhängers angeordnete Schaltschutzleisten (10) umfasst.

6. Anhänger nach Anspruch 4 oder 5,
**dadurch gekennzeichnet,**
**dass** der Notfallsignalgeber (12) ein seitlich entlang des Zwischenraums zu dem vorausfahrenden, ziehenden Fahrzeug gespanntes Band (16) umfasst, das durch Dehnung und/oder Zug auf einen Befestigungspunkt an dem Anhänger (2) ein Eindringen eines Hindernisses in den Zwischenraum erfasst und ein Notfallsignal erzeugt.

7. Anhänger nach Anspruch 6,
**dadurch gekennzeichnet,**
**dass** das Band (16) an dem vorausfahrenden Fahrzeug über zwei Umlenkführungen (17) zurück zu dem Anhänger (2) und somit an beiden Seiten des Zwischenraums entlang geführt wird und der Anhänger (2) zwei entsprechende Umlenkführungen (17) aufweist.

8. Routenzug bestehend aus einem Schlepper mit einer Anhängerkupplung sowie mindestens einem Anhänger (2) nach einem der Ansprüche 1 bis 7,
**dadurch gekennzeichnet,**
**dass** bei dem letzten angehängten Anhänger die Leitungen über eine Kurzschlussverbindung kurz geschlossen sind und das über die Signalverbindung übermittelte Notfallsignal eine Notabschaltung des Schleppers (3) auslöst.

9. Routenzug nach Anspruch 8,
**dadurch gekennzeichnet,**
**dass** die Kurzschlussverbindung ein in eine Steckverbindung eingesetzter Kurzschlussstecker ist.

## Claims

1. Trailer for a tugger train (1) having a traction device (8), in particular a front-side drawbar (9) and a rear-side trailer coupling, as well as a signal connection for transmitting an emergency signal of an emergency signal generator (12) of the trailer to a tractor (3) of the tugger train (1),
**characterized**
**in that** the signal connection is composed of two lines which are guided through the trailer (2) in such a way that they can be connected to the vehicle travelling ahead as well as to a possibly coupled trailer (2), and the emergency signal is generated by the introduction of at least one line.

2. Trailer according to Claim 1,
**characterized**
**in that** one of the lines includes the vehicle earth.

3. Trailer according to Claim 1 or 2,
**characterized**
**in that** the emergency signal generator (12) is an emergency switch which is arranged on the trailer.

4. Trailer according to one of Claims 1 to 3,
**characterized**
**in that** the emergency signal generator (12) generates an emergency signal when an obstacle approaches the trailer (2) from the front and/or when an obstacle laterally penetrates an intermediate space between a towing vehicle travelling ahead and the trailer (2), in particular in the case of mechanical contact.

5. Trailer according to Claim 4,
**characterized**
**in that** the emergency signal generator (12) comprises one or more contactor strips (10) which are arranged on the front side of the trailer.

6. Trailer according to Claim 4 or 5,
**characterized**
**in that** the emergency signal generator (12) comprises a belt (16) which is extended laterally along the intermediate space leading to the towing vehicle travelling ahead, which belt (16) senses penetration of an obstacle into the intermediate space through extension and/or tension at an attachment point to the trailer (2), and generates an emergency signal.

7. Trailer according to Claim 6,
**characterized**
**in that** the belt (16) is guided on the vehicle travelling ahead over two deflection guides (17) back to the trailer (2) and therefore along both sides of the intermediate space, and the trailer (2) has two corresponding deflection guides (17).

8. Tugger train composed of a tractor with a trailer coupling and at least one trailer (2) according to one of Claims 1 to 7,
**characterized**
**in that** at the last coupled trailer the lines are short-circuited by means of a short-circuit connection, and the emergency signal which is transmitted via the signal connection triggers an emergency shutdown of the tractor (3).

9. Tugger train according to Claim 8
**characterized**
**in that** the short-circuit connection is a short-circuit plug which is plugged into a plug-type connection.

## Revendications

1. Remorque destinée à un train routier (1), comportant un dispositif de remorquage (8), en particulier un timon avant (9) et un attelage arrière, ainsi qu'une liaison de signaux destinée à transmettre un signal d'urgence (12) à un véhicule tracteur (3) du train routier (1), **caractérisée en ce que** la liaison de signaux est constituée de deux lignes guidées à travers la remorque (2) de telle sorte que celles-ci peuvent être reliées au véhicule situé à l'avant et à une remorque (2) éventuellement attelée et **en ce que** le signal d'urgence est généré par l'interruption d'au moins une ligne.

2. Remorque selon la revendication 1,
**caractérisée en ce que** l'une des lignes comprend la masse du véhicule.

3. Remorque selon la revendication 1 ou 2,
**caractérisée en ce que** le générateur de signal d'urgence (12) est un interrupteur d'urgence disposé sur la remorque.

4. Remorque selon l'une des revendications 1 à 3,
**caractérisée en ce que** le générateur de signal d'urgence (12) génère un signal d'urgence lorsqu'un obstacle s'approche de la remorque (2) par l'avant et/ou lorsqu'un obstacle pénètre latéralement dans un espace intermédiaire entre un véhicule tracteur situé à l'avant et la remorque (2), en particulier en cas de contact mécanique.

5. Remorque selon la revendication 4,
**caractérisée en ce que** le générateur de signal d'urgence (12) comprend un ou plusieurs rubans disjoncteurs (10) disposés sur la face avant de la remorque.

6. Remorque selon la revendication 4 ou 5,
**caractérisée en ce que** le générateur de signal d'urgence (12) comprend une bande (16) qui est tendue latéralement le long de l'espace intermédiaire vers le véhicule tracteur situé à l'avant et qui détecte la pénétration d'un obstacle dans l'espace intermédiaire par un étirement et/ou une traction sur un point de fixation sur la remorque (2) et génère un signal d'urgence.

7. Remorque selon la revendication 6,
**caractérisée en ce que** la bande (16) est ramenée vers la remorque (2) sur le véhicule situé à l'avant par l'intermédiaire de deux guides de déviation (17) et ainsi, de part et d'autre et le long de l'espace intermédiaire, et **en ce que** la remorque (2) comporte deux guides de déviation correspondants (17).

8. Train routier constitué d'un véhicule tracteur comportant un attelage de remorque et d'au moins une remorque (2) selon l'une des revendications 1 à 7, **caractérisé en ce que** les lignes sont court-circuitées au niveau de la dernière remorque attelée par une connexion de court-circuit et **en ce que** le signal d'urgence transmis par l'intermédiaire de la liaison de signal déclenche un arrêt d'urgence du véhicule tracteur (3) .

9. Train routier selon la revendication 8,
**caractérisé en ce que** la connexion de court-circuit est un connecteur de court-circuit insérée dans un connexion par fiche.
